# EUROPEAN PATENT APPLICATION

(11) **EP 2 552 087 A1**
(43) Date of publication of application: **30.01.2013**
(21) Application number: 11175798.5
(22) Date of filing: 28.07.2011
(51) Int. Cl.: H04M 1/06, H01F 7/02

(54) **Magnetic positioning structure for a digital device**

(71) Applicant: Wang, Leao, Taichung Hsien 411 (TW)
(72) Inventor: Wang, Leao, Taichung Hsien 411 (TW)
(74) Representative: 2K Patentanwälte Blasberg Kewitz & Reichel

(57) **Abstract**

A magnetic positioning structure for a digital device (10), wherein the digital device (10) includes at the back thereof a metal plate (12) for the magnetic attraction and a plurality of positioning strips (14). Each of the positioning strips (14) is provided with positioning nipples (16). The above-mentioned elements are adapted to a magnetic attraction element (22) and positioning recesses (26) of a specially designed bearing support (20). In this way, the digital device (10) may be firmly and reliably attached to the bearing support (20) without unexpected falling risk.

## Description

### BACKGROUND OF THE INVENTION

### 1. Fields of the Invention

The invention relates to a magnetic positioning structure for a digital device, and more particularly, to a structure with magnetic elements for firmly and reliably securing the digital device to a specially designed bearing support.

### 2. Description of the Related Art

Conventional portable digital devices include mobile phones, digital music players, PDAs, e-books, digital photo frames, notebook computers, tablet PCs, handheld video games, etc. These are the latest generation of digital products. These digital devices are small, lightweight, and thin so that the user can play them only with his both hands. Of course, their operation and the control can be also done by placing them on the lap or any horizontal desk surface. Therefore, they are considered as a very convenient product.

However, the value of theses products is not low and they are not shockproof as well. Therefore, it is necessary to use them very carefully to avoid undesired events such as falling impact that causes a great loss.

### SUMMARY OF THE INVENTION

A primary object of the invention is to provide a magnetic positioning structure for a digital device that employs the magnetic attraction to ensure a practical positioning such that the digital device may be placed in a fixed position for use or for the charging purpose without the unexpected falling risk. Moreover, the specially designed bearing support may be constructed as a slope to achieve the optimal view angle in use.

According to the invention, the digital device includes at the back thereof a metal plate for the magnetic attraction and a plurality of positioning strips. Each of the positioning strips is provided with positioning nipples. The above-mentioned elements are adapted to a magnetic attraction element and positioning recesses of a specially designed bearing support. In this way, the digital device may be firmly and reliably attached to the bearing support without unexpected falling risk.

### BRIEF DESCRIPTION OF THE DRAWINGS

The accomplishment of this and other objects of the invention will become apparent from the following description and its accompanying drawings of which:
FIG. 1 is a perspective view of the back of a digital device of the invention;
FIG. 2 is a perspective view of the structure and the application of the invention;
FIG. 3 is a perspective view of the application of the invention; and
FIG. 4 is an application of the invention to an electric treadmill.

### DETAILED DESCRIPTION OF THE PREFERRED EMBODIMENT

The technical measures, structural characteristics of the present invention will become apparent with the detailed description of preferred embodiments accompanied with related drawings as follows:
It is noteworthy to point out that various digital devices may come with different shapes, sizes and unique structural layouts, so that related components and layouts of the present invention can be modified and designed accordingly to meet the corresponding requirements of various digital devices.

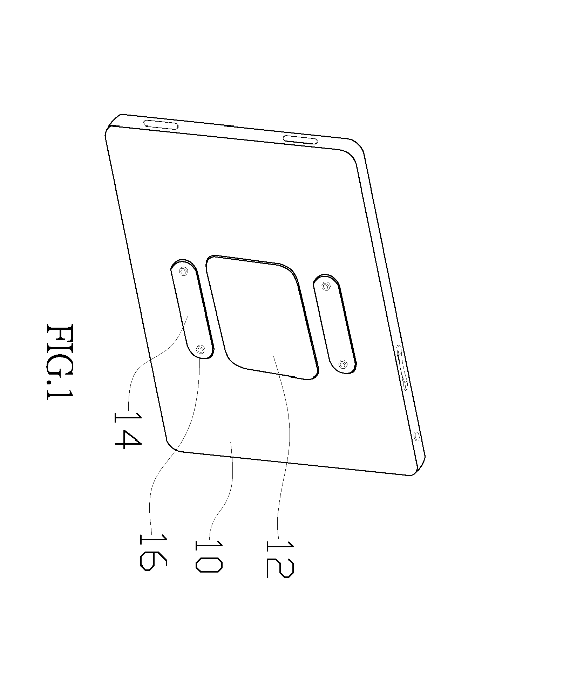

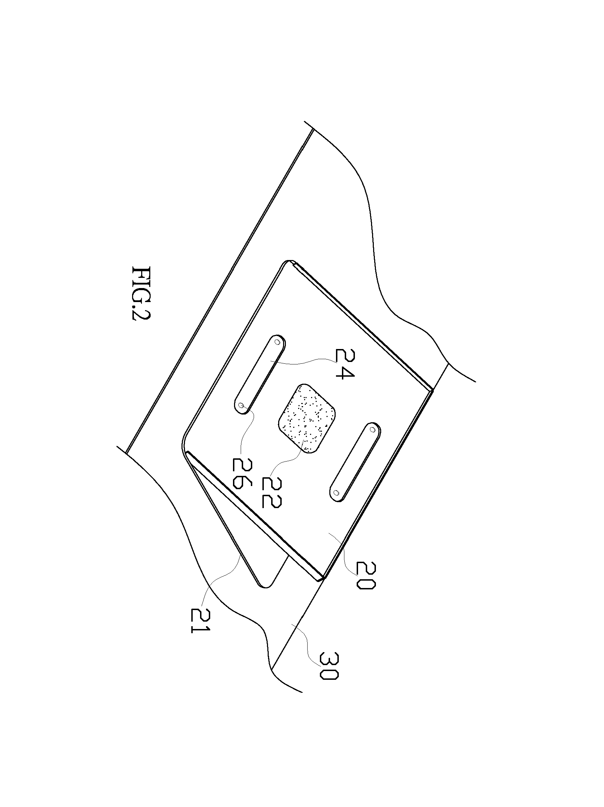

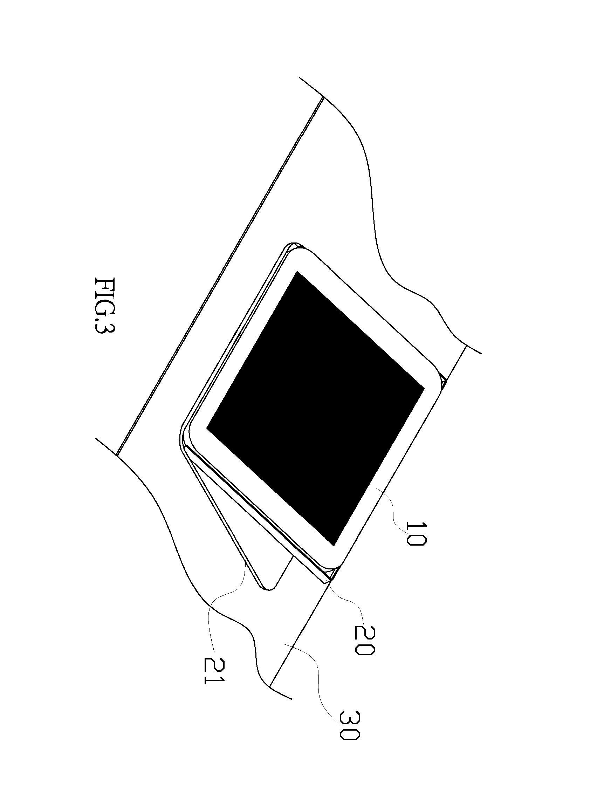

Referring to FIGS. 1 through 3, a portable digital device 10 in accordance with a preferred embodiment of the invention includes at the back thereof a metal plate 12 for the magnetic attraction and a plurality of positioning strips 14. Each of the positioning strips 14 is provided with positioning nipples 16. A bearing support 20 includes a magnetic attraction element 22 corresponding to the metal plate 12 and positioning recesses 24 corresponding to the positioning strips 14. In this way, the portable digital device 10 may be firmly and reliably attached to the bearing support 20 without unexpected falling risk.

The bearing support 20 can be constructed as a slope and is secured to any surface 30 by means of a horizontal bottom 21. Moreover, a plurality of receiving holes 26 corresponding to the positioning nipples 16 of the positioning strips 14 of the portable digital device 10 are formed in the positioning recesses 24 so as to enhance a more reliable fixing effect.

Based on the above-mentioned construction, the portable digital device 10 can be secured to a fixed position to prevent an unexpected falling event when the portable digital device 10 is operated or charged. Moreover, the slope of the bearing support 20 may fulfill the requirements of the optimal view angle, thereby considerably increasing the using comfort.

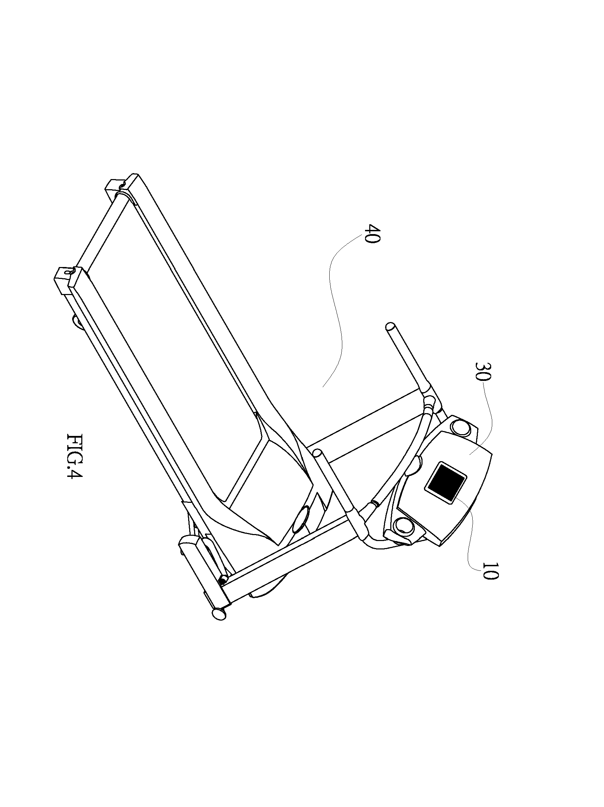

Referring to FIG. 4, the invention is applied to an electric treadmill 40. It is apparent from the drawing that the portable digital device 10 serves as a control unit for the electric treadmill 40. In this way, the electric treadmill 40 can be operated and controlled in an easy way. Meanwhile, the portable digital device 10 can be charged.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A magnetic positioning structure for a digital device (10), comprising:
a) a digital device having at the back thereof a metal plate (12) for the magnetic attraction and a plurality of positioning strips (14), each of the positioning strip being provided with positioning nipples (16); and
b) a bearing support (20) constructed as a slope and secured by means of a horizontal bottom to any surface in a sloping position, the bearing support having a magnetic attraction element (22) and positioning recesses (24) at the place facing to the end surface of the back of the digital device, a plurality of receiving holes (26) being formed in the positioning recesses, the positioning recesses being adapted to the positioning strips and the receiving holes being adapted to the positioning nipples of the digital device to ensure a reliable connection between the digital device and the bearing support,
whereby the digital device is firmly and reliably attachable to the bearing support without unexpected falling risk.
